# EUROPÄISCHE PATENTSCHRIFT

(11) **EP 3 856 574 B1**
(45) Veröffentlichungstag und Bekanntmachung des Hinweises auf die Patenterteilung: **29.05.2024**
(21) Anmeldenummer: 19773042.7
(22) Anmeldetag: 18.09.2019
(51) Int. Cl.: B60R 13/10

(54) **KENNZEICHEN FÜR EIN FAHRZEUG**
LICENSE PLATE FOR A VEHICLE
PLAQUES MINÉRALOGIQUES POUR VÉHICULES

(30) Priorität: 28.09.2018 DE 102018007679
(43) Veröffentlichungstag der Anmeldung: 04.08.2021
(73) Patentinhaber: Tönnjes ISI Patent Holding GmbH, 27751 Delmenhorst (DE)
(72) Erfinder: PRETORIUS, Albertus Jacobus, Karalee, Queensland 4306 (AU)
(74) Vertreter: Hoener, Matthias
(86) Internationale Anmeldenummer: PCT/EP2019/075066
(87) Internationale Veröffentlichungsnummer: WO 2020/064473

(56) Entgegenhaltungen:
- WO-A1-2015/183111
- CN-U- 206 551 974
- DE-A1-102014 012 291
- DE-A1-102019 002 722

## Beschreibung

Die Erfindung betrifft ein Kennzeichen für ein Fahrzeug gemäß dem Oberbegriff des Anspruchs 1.

Bei dem Kennzeichen gemäß der Erfindung handelt es sich um ein sogenanntes Nummernschild, das vorn und/oder hinten an einer Karosserie oder einer Stoßstange eines Fahrzeuges befestigt werden kann.

Kennzeichen der genannten Art werden häufig gefälscht oder für fremde Fahrzeuge verwendet. Um das zu verhindern, sind Kennzeichen bekannt, welche einen berührungslos auslesbaren Datenträger aufweisen. Dieser enthält relevante Daten des Fahrzeugs, zu dem das Kennzeichen gehört. Das Auslesen dieser Daten erfolgt mittels eines externen Lesegeräts. Der Vergleich der ausgelesenen Daten mit dem Fahrzeug, an dem das Kennzeichen verwendet wird, lässt Rückschlüsse auf Manipulationen zu, insbesondere wenn das Kennzeichen einem fremden Fahrzeug zugeordnet ist.

Bei bekannten Kennzeichen sind die Datenträger mit einer Schlitzantenne gekoppelt. Über diese Schlitzantenne lässt sich der Datenträger sodann auch über eine größere Entfernung auslesen. Die Schlitzstruktur der Antenne ist dabei in den metallischen Kennzeichenkörper des Kennzeichens oder in eine metallisierte Schicht des Kennzeichens eingearbeitet. Durch die Positionierung der Schlitzantenne auf dem Kennzeichenkörper ist die Positionierung der konventionellen Beschriftung des Kennzeichens mit Buchstaben und/oder Ziffern oder dergleichen eingeschränkt. Gleichermaßen ist der Schlitz aufgrund der notwendigen Beschriftung des Kennzeichens nur an einigen wenigen Positionen auf dem Kennzeichenkörper unterbringbar.

Ein weiterer Nachteil der bekannten Kennzeichen mit einer Schlitzantenne besteht darin, dass die Sendeleistung der Antennen begrenzt ist. Da die Abstrahlcharakteristik bzw. die Dipolcharakteristik der Schlitzantenne wenigstens weitgehend symmetrisch ist, wird ein Teil der emittierten elektromagnetischen Wellen von dem Fahrzeug weg abgestrahlt und ein anderer Teil in Richtung des Fahrzeugs. Das führt dazu, dass wenigstens die Hälfte der Sendeleistung von der Halterung des Kennzeichens oder dem Fahrzeug selbst absorbiert wird und nur ein Bruchteil der gesamten Sendeleistung in Richtung eines potentiellen Empfängers gestrahlt wird.

Das Dokument DE102014012291A1 offenbart ein Kennzeichen mit den Merkmalen des Oberbegriffs des Anspruchs 1.

Der Erfindung liegt die Aufgabe zugrunde, ein Kennzeichen mit einem Datenträger und einer Antenne zu schaffen, das eine verbesserte Sendeleistung aufweist und gleichzeitig ausreichend Platz für die Positionierung einer Beschriftung besteht.

Ein Kennzeichen, insbesondere ein Fahrzeugkennzeichen, zur Lösung dieser Aufgabe weist die Merkmale des Anspruchs 1 auf. Demnach ist es vorgesehen, dass das Kennzeichen einen Kennzeichenkörper aufweist mit mindestens einem Beschriftungsfeld. Diesem Beschriftungsfeld ist eine Beschriftung in Form von Buchstaben und/oder Ziffern zugeordnet. Durch diese Beschriftung erfolgt eine erste Identifizierung des Fahrzeugs bzw. des Fahrzeughalters. Zusätzlich ist dem Kennzeichenkörper mindestens ein berührungslos auslesbarer Datenträger mit einer Antenne zugeordnet. Auf diesem Datenträger können weitere Informationen bzgl. des Fahrzeugs und/oder bzgl. des Fahrzeughalters gespeichert sein. Der Kennzeichenkörper des Kennzeichens bildet mindestens einen Hohlraum, wobei eine den Hohlraum überdeckende Vorderseite des Kennzeichenkörpers oder eine Beschichtung der Vorderseite des Kennzeichenkörpers eine Schlitzstruktur aufweist. Diese Schlitzstruktur bildet erfindungsgemäß die Antenne für den Datenträger. Durch den Hohlraum im Inneren des Kennzeichenkörpers ist selbiger als flacher, hohler Quader ausgebildet. Durch diese Schlitzstruktur in Verbindung mit dem Hohlraum des Kennzeichenkörpers kann die Abstrahlcharakteristik der Antenne bzw. der Schlitzantenne verbessert werden, sodass sich die Daten, die auf dem Datenträger gespeichert sind, mit einer größeren Sendeleistung transportieren lassen.

Nach der Erfindung ist es vorgesehen, dass der mindestens eine Hohlraum durch eine Beabstandung der Vorderseite und einer Rückseite des Kennzeichenkörpers gebildet ist. Die Vorderseite oder ein Deckelteil und die Rückseite oder ein Bodenteil des den Hohlraum umschließenden Kennzeichenkörpers werden durch eine umlaufende Umrandung zusammengehalten. Diese Umrandung kann sowohl eckige als auch abgerundete Ecken aufweisen. Die Grundform sowohl der Rückseite als auch der Vorderseite ist vorzugsweise identisch ausgebildet und in der Regel rechteckig. Durch diese Form des hohlen Kennzeichenkörpers weist dieser eine erhöhte Stabilität auf. Der Abstand der Rückseite des Kennzeichenkörpers zu der Vorderseite kann einige Millimeter betragen.

Bevorzugt kann es ein weiteres Ausführungsbeispiel der vorliegenden Erfindung vorsehen, dass die Vorderseite bzw. das Deckelteil, die Rückseite bzw. das Bodenteil und/oder die Umrandung aus einem transparenten Material, wie beispielsweise Kunststoff, hergestellt sind. Sowohl die Vorderseite, die Rückseite als auch die Umrandung können von außen und/oder auch von innen wenigstens bereichsweise mit einer Metallbeschichtung beschichtet sein. In dieser Metallbeschichtung auf der Vorderseite des Kennzeichenkörpers ist die Schlitzstruktur eingearbeitet. Alternativ ist es auch denkbar, dass die Vorderseite, die Rückseite und/oder die Umrandung aus Metall ausgebildet sind. Dabei bietet sich beispielsweise Aluminium an. Bei dem erstgenannten Ausführungsbeispiel kann beispielsweise ein Kunststoffquader von außen mit einer Metallschicht versehen, insbesondere bedampft, werden. Durch diese Metallisierung bzw. durch das Metall lässt sich auf eine einfache Art und Weise die Schlitzstruktur für die Antenne des Datenträgers herstellen. Dabei ist nahezu jede beliebige Form der Schlitzstruktur vorstellbar.

Ein weiteres Ausführungsbeispiel der Erfindung kann es vorsehen, dass die Schlitzstruktur als gerader Schlitz ausgebildet ist, der parallel zu einer Seitenkante der Vorderseite des Kennzeichenkörpers orientiert ist. Gleichermaßen ist es denkbar, dass die Schlitzstruktur aus mehreren Schlitzen, die parallel oder antiparallel zueinander angeordnet sind, gebildet wird. Ein weiteres besonders bevorzugtes Ausführungsbeispiel kann es vorsehen, dass die Schlitzstruktur aus einem ersten Schlitz ausgebildet ist, an dessen Enden jeweils zwei, vorzugsweise parallele, kürzere Schlitze angeordnet sind, sodass die Schlitzstruktur ein langgezogenes "H" bildet. Diese Struktur für eine Schlitzantenne hat besonders vorteilhafte Eigenschaften bzgl. der Emission von elektromagnetischen Wellen sowie der Absorption von elektromagnetischen Wellen.

Eine weitere vorteilhafte Ausführungsform der vorliegenden Erfindung kann es vorsehen, dass in dem Hohlraum zwischen der Vorderseite und der Rückseite mindestens ein, insbesondere eine Vielzahl von, vorzugsweise parallel zueinander ausgerichteten, Abstandselemente bzw. Strukturelemente angeordnet sind. Durch diese Strukturelemente bzw. Abstandselemente oder Abstandshalter kann der Kennzeichenkörper weiter stabilisiert werden. Durch diese Elemente kann der Abstand zwischen der Vorderseite und der Rückseite definiert bzw. fixiert werden. Ein unbeabsichtigtes Zusammendrücken des Kennzeichenkörpers ist damit unwahrscheinlich.

Nach der Erfindung ist es vorgesehen, dass die Vorderseite und eine der Schlitzstruktur gegenüberliegende Innenseite der Rückseite in dem Hohlraum retroreflektierend ist, insbesondere mit einer retroreflektierenden Schicht beschichtet ist, wobei die retroreflektierende Fläche der Innenseite größer ist als die Schlitzstruktur. Durch diese retroreflektierende Eigenschaft der Innenseite des Hohlraums wird Licht, welches durch die Schlitzstruktur in das Innere des Hohlraums fällt, zurück reflektiert. Durch diese Reflektion ist die Schlitzstruktur nur schwer zu erkennen. Insbesondere bei der Verwendung eines Bildaufnahmegeräts im Zusammenhang mit einem Blitzlicht ist das Strukturelement so gut wie nicht sichtbar. Gleichermaßen werden die elektromagnetischen Wellen, welche von der Schlitzantenne bzw. der inversen Dipolantenne ausgestrahlt werden, an der metallisierten Rückseite des Hohlraums zurück reflektiert und treten durch die Schlitzstruktur wieder aus dem Hohlraum aus.

Weiter kann es erfindungsgemäß vorgesehen sein, dass auf der Vorderseite des Kennzeichenkörpers eine retroreflektierende, insbesondere selbstklebende, Schicht oder Folie appleziert ist, die eine der Form der Schlitzstruktur entsprechende Demetallisierung oder eine entsprechende schlitzartige Aussparung aufweist. Durch diese applezierte Schicht kann auf eine einfache Art und Weise die Schlitzstruktur gebildet werden.

Bevorzugt ist es außerdem denkbar, dass auf der Vorderseite des Kennzeichenkörpers, insbesondere auf einer retroreflektierenden Schicht bzw. Beschichtung des Kennzeichenkörpers, die Beschriftung, vorzugsweise eine die Beschriftung aufweisende, insbesondere selbstklebende, Schicht oder Folie appleziert ist. Durch den Hohlkörper bzw. durch die ebenfalls retroreflektierende Rückseite des Hohlraums erscheint das Kennzeichen von vorne betrachtet als durchgängig, als ob der Kennzeichenkörper keine Schlitzstruktur aufweisen würde. Dadurch lässt sich die Schlitzstruktur nahezu an einer beliebigen Stelle, auch unter der Beschriftung, auf dem Kennzeichenkörper anbringen und zwar ohne, dass die Lesbarkeit der Beschriftung dadurch beeinträchtigt werden würde. Da insbesondere der Bereich der Schlitzstruktur demetallisiert ist, wird die Sende- bzw. Empfangsleistung der Schlitzantenne durch die Folie bzw. die Schicht nicht beeinflusst. Für elektromagnetische Wellen ist die Beschriftung transparent.

Schließlich kann es außerdem vorgesehen sein, dass der Datenträger ein ein magnetisches Feld erzeugender Datenträger ist, und insbesondere induktiv und/oder kapazitiv an die Antenne gekoppelt ist, wobei der Datenträger elektrisch isoliert von der Antenne auf oder in dem Kennzeichenkörper angeordnet ist. Darüber hinaus ist es auch denkbar, dass die Schlitzstruktur einen Durchbruch aufweist, wobei vorzugsweise der Durchbruch den Schlitz im Bereich eines geschlossenen Endes vergrößert, und der Datenträger in dem Durchbruch angeordnet ist.

Für eine größere mechanische Stabilität bzw. Sicherheit kann es außerdem vorgesehen sein, dass der Datenträger in der Schlitzstruktur bzw. in dem Durchbruch fixiert, insbesondere von einer Beschichtung abgedeckt oder eingegossen ist.

Um das Kennzeichen bzw. den Kennzeichenkörper an einem Fahrzeug zu befestigen, kann der Rückseite des Kennzeichenkörpers mindestens eine Montagehilfe, insbesondere Bohrungen oder sonstige Aufnahmen, zugeordnet sein. Über diese Montagehilfe ist der Kennzeichenkörper auf eine einfache und vor allem flexible Art und Weise an dem Fahrzeug befestigbar.

Ein weiteres Ausführungsbeispiel der Erfindung kann es vorsehen, dass die Schlitzstruktur in einem ersten oder einem zweiten Drittel auf der Vorderseite gemessen von einer Längsseite des Kennzeichenkörpers positioniert ist. Durch diese Positionierung auf dem Kennzeichenkörper kann zum anderen gleichzeitig die Beschriftung auf der Vorderseite des Kennzeichenkörpers angebracht werden und zwar ohne, dass die Lesbarkeit der Beschriftung beeinträchtigt und die Sendeleistung der Schlitzantenne herabgesetzt wird.

Ein bevorzugtes Ausführungsbeispiel der Erfindung wird nachfolgend anhand der Zeichnung näher erläutert. In dieser zeigen:
- Fig. 1: eine Sicht auf ein Kennzeichen mit einer Schlitzantenne,
- Fig. 2: eine Explosionsdarstellung des Kennzeichens gemäß Fig. 1,
- Fig. 3: eine Darstellung einer Folie mit einer Beschriftung,
- Fig. 4: eine Darstellung einer Reflexfolie mit einer Schlitzstruktur,
- Fig. 5: eine Darstellung eines Deckelteils eines Kennzeichenkörpers,
- Fig. 6: eine Darstellung einer Stützstruktur,
- Fig. 7: eine Darstellung eines Bodenteils des Kennzeichenkörpers,
- Fig. 8: einen Schnitt durch ein Kennzeichen gemäß Fig. 1,
- Fig. 9: eine Darstellung einer Rückseite des Kennzeichens,
- Fig. 10: eine Sicht auf ein Verbindungsmittel, und

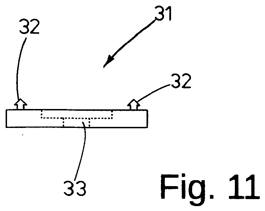

- Fig. 11: eine Seitenansicht des Verbindungsmittels gemäß Fig. 10.

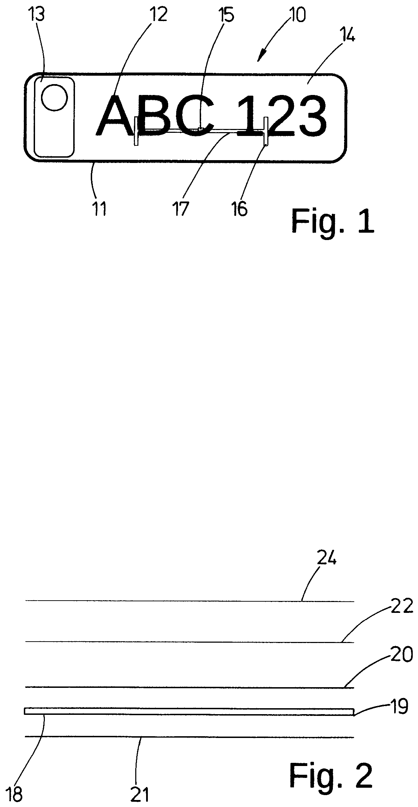

Ein Beispiel für ein erfindungsgemäßes Kennzeichen 10 für ein Fahrzeug wird in der Fig. 1 dargestellt. Derartige Kennzeichen 10 werden auch als Fahrzeugkennzeichen oder Nummernschild bezeichnet. In der Regel werden diese Kennzeichen 10 vorne und/oder hinten an einem Fahrzeug befestigt. Es ist jedoch auch denkbar, dass diese Kennzeichen 10 an anderen Positionen befestigt werden, wie beispielsweise an einer Windschutzscheibe oder einem Fahrerhaus des Fahrzeuges. Kennzeichen 10 der hier beschriebenen Art dienen der Identifizierung des Fahrzeugs und in einigen Fällen auch des Fahrzeughalters. Zu diesem Zweck sind auf dem Kennzeichen 10 bzw. auf einem das Kennzeichen 10 bildenden Kennzeichenkörper 11 Buchstaben und/oder Zahlen angeordnet. Diese Beschriftung 12 kann verschiedene Informationen kodiert wiedergeben. Die Anordnung bzw. der Informationsgehalt dieser Beschriftung 12 kann sich von Land zu Land unterscheiden. Außerdem weist das in der Fig. 1 dargestellte Ausführungsbeispiel des Kennzeichens 10 eine Länderkennung 13 auf. Durch diese Länderkennung 13 kann das Fahrzeug mit einem Länderkürzel versehen werden, welches Auskunft über das Land gibt, in dem das Fahrzeug zugelassen ist. Eine derartige Länderkennung 13 ist jedoch nicht in allen Ländern auf dem Kennzeichen 10 angeordnet und soll daher auch nicht einschränkend für die hier beschriebene Erfindung sein.

Das Kennzeichen 10 bzw. der Kennzeichenkörper 11 ist in der Regel als langgestrecktes Rechteck ausgebildet. Es ist jedoch auch denkbar, dass dieses Rechteck gestaucht ist bzw. ein Quadrat bildet. Zentriert auf der Oberfläche dieses Rechtecks bzw. auf dem Kennzeichenkörper 11 ist auf einem Beschriftungsfeld 14 die Beschriftung 12 angeordnet. Es ist sind außerdem Kennzeichen 10 bekannt, die neben der Beschriftung 12 einen Datenträger 15 aufweisen, auf dem in elektronischer Form weitere Daten bzw. Informationen über das Fahrzeug und/oder den Fahrzeughalter gespeichert sind. Für ein berührungsloses Auslesen dieses Datenträgers 15 oder auch für ein berührungsloses Beschreiben des Datenträgers 15 ist diesem eine Antenne 16 zugeordnet. Bei bekannten Kennzeichen 10 ist diese Antenne 16 als Schlitzantenne ausgebildet. Diese Schlitzantenne wird durch eine Ausnehmung in einem metallischen Kennzeichen bzw. einer metallischen Schicht gebildet. Die Antenne 16 bzw. Schlitzantenne ist mit dem Datenträger 15 induktiv bzw. kapazitiv gekoppelt. Bei den bekannten Kennzeichen 10 mit einer Schlitzantenne ist die Schlitzantenne derart auf dem Kennzeichenkörper 11 angeordnet, dass sie sich nicht mit der Beschriftung 12 überschneidet. Bei dem hier beschriebenen und in der Fig. 1 dargestellten erfindungsgemäßen Kennzeichen 10 kann sich die Antenne 16 an einem beliebigen Ort auf dem Beschriftungsfeld 14 befinden. Somit ist es auch denkbar, dass die Beschriftung 12 die Antenne 16 abdeckt.

Die in der Fig. 1 dargestellte Schlitzstruktur 17 der Antenne 16 bildet ein langgezogenes "H". Es ist jedoch auch denkbar, dass diese Schlitzstruktur 17 aus mehreren einzelnen parallelen Schlitzen besteht, aus einem einzigen Schlitz oder mehreren zusammenhängenden Schlitzen, die parallel und/oder orthogonal angeordnet sind.

Das hier beschriebene Kennzeichen 10 besteht im Wesentlichen aus dem Kennzeichenkörper 11, der als Quader ausgebildet ist und in seinem Inneren einen Hohlraum 18 aufweist. In der Fig. 2 ist für eine Darstellung des Kennzeichens 10 eine Explosionsdarstellung abgebildet, in der die einzelnen Schichten, aus denen das Kennzeichen 10 aufgebaut ist, sichtbar werden. Der Kennzeichenkörper 11 setzt sich zusammen aus einer Umrandung 19, einem Deckelteil 20 und einem Bodenteil 21. Während das Deckelteil 20 und das Bodenteil 21 plattenartig ausgebildet sind, stellt die Umrandung 19 eine Art umlaufenden Kragen dar. Die Höhe der Umrandung 19 bzw. des Kragens stellt die Dicke oder Stärke des Kennzeichenkörpers 11 dar. Die Grundfläche des Deckelteils 20, des Bodenteils 21 und der Umrandung 19 sind identisch mit der Grundfläche des Kennzeichenkörpers 11 bzw. des Kennzeichens 10. Zur Bildung des Kennzeichenkörpers 11 wird das Deckelteil 20 auf die Umrandung 19 abgesetzt und das Bodenteil 21 parallel zu dem Deckelteil 20 ebenfalls mit der Umrandung 19 in Kontakt gebracht. Diese drei Teile werden sodann fest miteinander verbunden, vorzugsweise verklebt. Dadurch bildet das Deckelteil 20 mit dem Bodenteil 21 und der Umrandung 19 einen den Kennzeichenkörper 11 bildenden Quader mit dem Hohlraum 18. Es ist denkbar, dass der Kennzeichenkörper 11 bzw. die vorgenannten Einzelteile aus Kunststoff ausgebildet sind. Gleichermaßen ist es denkbar, dass die Einzelteile des Kennzeichenkörpers 11 metallisch sind. Ein weiteres Ausführungsbeispiel kann es außerdem vorsehen, dass der Kennzeichenkörper 11 aus einem einzigen zusammenhängenden Teil aufgebaut ist. Für den Fall, dass der Kennzeichenkörper 11 bzw. das Deckelteil 20, das Bodenteil 21 sowie die Umrandung 19 aus einem Kunststoff hergestellt ist, kann es erfindungsgemäß vorgesehen sein, dass diese Teile von außen oder von innen mit einer metallischen Beschichtung versehen werden. Diese metallische Beschichtung ist derart ausgebildet, dass sie eine elektrische Oberflächenleitung bildet. Durch diese elektrische Leitfähigkeit der Oberfläche wirkt der Kennzeichenkörper 11 insbesondere für elektromagnetische Strahlung wenigstens in einigen Spektralbereichen reflektierend.

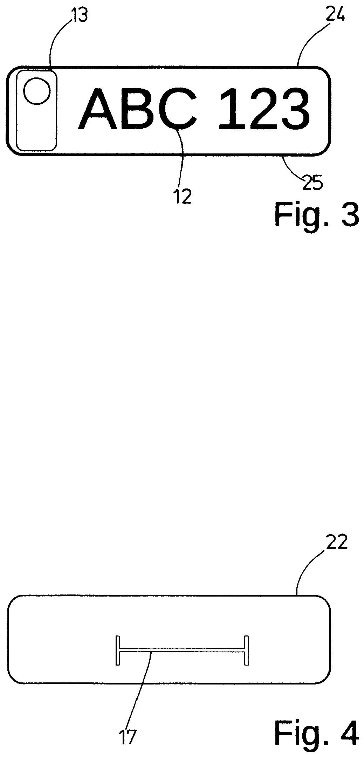

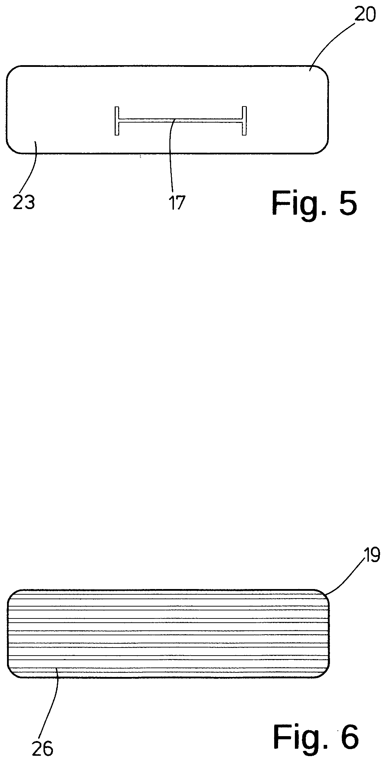

Auf das Deckelteil 20 des Kennzeichenkörpers 11 schließt sich eine ggf. metallisierte Reflexfolie 22 bzw. ein Retroreflexfolie an. Diese Reflexfolie 22 wird vorzugsweise auf das Deckelteil 20 geklebt. Die in der Fig. 4 dargestellte Reflexfolie 22 ist von ihrer Dimensionierung her identisch oder wenigstens nahezu identisch mit den Abmaßen bzw. der Grundfläche des Kennzeichens 10. Zentriert auf der Reflexfolie 22 ist die die Antenne 16 bildende Schlitzstruktur 17 positioniert. Diese Schlitzstruktur 17 stellt eine Ausnehmung bzw. einen Ausschnitt in der Reflexfolie 22 dar. In diesem Bereich ist die Reflexfolie 22 nicht metallisiert. Auch das Deckelteil 20 ist in dem Bereich, in dem sich die Schlitzstruktur 17 auf der Reflexfolie 22 befindet, demetallisiert. Das heißt, dass entweder, so wie in Fig. 5 dargestellt, die metallische Beschichtung 23 auf dem Deckelteil 20 eine identische Schlitzstruktur 17 aufweist, die beim Zusammenfügen der Reflexfolie 22 mit dem Deckelteil 20 deckungsgleich mit der Schlitzstruktur 17 der Reflexfolie 22 ist oder, dass das Deckelteil 20 komplett demetallisiert ist, also keine metallische Beschichtung 23 aufweist.

Auf die Reflexfolie 22 kann sodann eine insbesondere selbstklebende Folie 24 appliziert werden. Diese Folie 24 ist mit der Beschriftung 12 versehen. Es ist außerdem denkbar, dass die Folie 24 im Nachhinein mit der Beschriftung 12 versehen wird. Außerdem kann diese Folie 24 die vorgenannte Länderkennung 13 aufweisen. Die Folie 24 ist in ihrer Dimensionierung identisch zu dem Kennzeichenkörper 11 bzw. dem Kennzeichen 10. Während die Folie 24 wenigstens weitestgehend transparent für sichtbares Licht ausgebildet ist, ist die Beschriftung 12 lichtundurchlässig. Das heißt, dass die Beschriftung 12 die Reflexfolie 22 abdeckt und somit nur eintreffendes Licht von der Reflexfolie 22 reflektiert wird, das nicht auf die Beschriftung 12 fällt. Auf die Folie 24 können außerdem weitere Merkmale gedruckt werden, wie beispielsweise eine Umrandung 25. Die Folie 24 kann außerdem dazu dienen, den in der Fig. 1 dargestellten Datenträger, der wenigstens in einem elektrischen bzw. elektromagnetischen Kontakt mit der Schlitzstruktur 17 steht, vor Manipulationen oder anderen Umwelteinflüssen zu schützen. Durch die Folie 24 kann der auf der Reflexfolie 22 angeordnete Datenträger 15 abgedeckt sein. Es ist aber auch denkbar, dass der Datenträger 15 einer Innenseite des Deckelteils 20, oder an einer Oberseite des Deckelteils 20 angeordnet ist.

Für eine Stabilisierung des Kennzeichens 10 bzw. des Kennzeichenkörpers 11 können in dem Hohlraum 18 des Kennzeichenkörpers 11 Abstandselemente bzw. Strukturelemente 26 angeordnet sein (Fig. 6). Diese Strukturelemente 26 sind bei dem in der Fig. 6 dargestellten Ausführungsbeispiel stegartig ausgebildet und parallel zueinander innerhalb der Umrandung 19 angeordnet. Die einzelnen Strukturelemente 26 können dabei in direkten Kontakt mit dem Deckelteil 20 und dem Bodenteil 21 des Kennzeichenkörpers 11 stehen. Durch diese Strukturelemente 26 erlangt der gesamte Kennzeichenkörper 11 eine gewisse Steifheit, die ihn gegen mechanische Kräfte wie beispielsweise Verdrehen oder Verbiegen schützt. Insbesondere bei einem Kennzeichenkörper 11 aus Kunststoff tragen die Strukturelemente 26 wesentlich zur Stabilität des Kennzeichens 10 bei. Dabei kann es außerdem vorgesehen sein, dass die Strukturelemente 26 ebenfalls aus einem Kunststoff bzw. einem transparenten Kunststoff ausgebildet sind. Die Strukturelemente 26 können derart in dem Hohlraum 18 angeordnet sein, dass sie mit der Schlitzstruktur 17 zusammenfallen oder dass die Schlitzstruktur 17 nicht über einem oder mehreren der Strukturelemente 26 angeordnet ist.

Das Bodenteil 21 weist an einer der Schlitzstruktur 17 zugewandten Seite eine retroreflektierende Beschichtung 27 auf. Diese retroreflektierende Beschichtung 27 ist mindestens derart bemessen, dass sie in ihrer Länge und Breite den Abmessungen der Schlitzstruktur 17 entspricht bzw. größer ist als die Schlitzstruktur 17. Bei dieser Beschichtung 27 kann es sich ebenfalls um eine Folie handeln oder um retroreflektierende Farbe, die bei dem Zusammenbau des Kennzeichenkörpers 11 auf die Oberfläche des Bodenteils 21 aufgetragen wird.

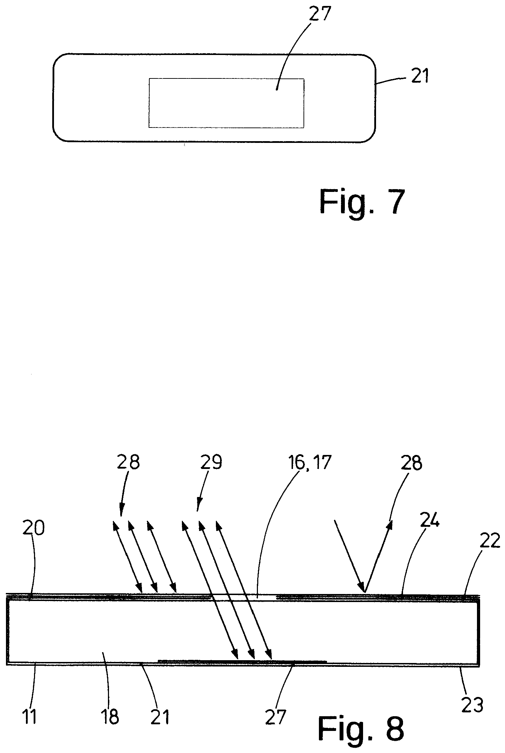

In der Fig. 8 ist stark schematisiert ein Schnitt durch das Kennzeichen 10 bzw. durch den Kennzeichenkörper 11 mit dem Hohlraum 18 sowie der metallischen Beschichtung 23 des Kennzeichenkörpers 11, der Reflexfolie 22 sowie der Folie 24 dargestellt. Im Bereich der Schlitzstruktur 17 bzw. der Antenne 16 ist die metallische Beschichtung 23 und die Reflexfolie 22 unterbrochen. Es ist jedoch auch denkbar, dass die Reflexfolie 22 nicht unterbrochen ist. Insbesondere, wenn das Deckelteil 20 des Kennzeichenkörpers 11 nicht metallisch beschichtet ist, weist nur die Folie 24, die sodann metallisiert ist, eine Aussparung für die Schlitzstruktur 17 auf. Die insbesondere weitestgehend transparente Folie 24 deckt die gesamte Oberseite des Kennzeichens 10 ab.

Auf dem Bodenteil 21 des Kennzeichenkörpers 10 ist der Schlitzstruktur 17 gegenüberliegend die retroreflektierende Beschichtung 27 aufgetragen. Wenn nun Licht auf das Kennzeichen 10 strahlt, wird dieses, wie durch die Pfeile 28 schematisiert dargestellt, an der Reflexfolie 22 reflektiert bzw. retroreflektiert. Wenn die Lichtstrahlen durch die Schlitzstruktur 17 in den Hohlraum 18 treffen, werden sie ebenfalls durch die retroreflektierende Beschichtung 27 gemäß den Pfeilen 29 reflektiert bzw. retroreflektiert. Wird nun beispielsweise von dem Kennzeichen 10 eine bildliche Aufnahme erstellt unter Zuhilfenahme eines Blitzlichtes, ist die Schlitzstruktur 17 nur schwer oder gar nicht sichtbar, da auch das Licht, das durch die Schlitzstruktur 17 trifft, reflektiert wird. Durch diese Anordnung der retroreflektierenden Beschichtung 27 auf einer der Schlitzstruktur 17 gegenüberliegenden Seite lässt sich die Schlitzstruktur 17 relativ zu der Beschriftung 12 somit beliebig positionieren, ohne dass die Lesbarkeit oder die Sichtbarkeit der Beschriftung 12 dadurch beeinträchtigt wird. Dadurch, dass die retroreflektierende Beschichtung 27 in ihrer Dimensionierung größer ist als die Schlitzstruktur 17 werden auch Lichtstrahlen, die unter einem spitzen Winkel zu der Oberseite des Kennzeichens 10 durch die Schlitzstruktur 17 treffen, zurückreflektiert.

Ein weiterer Vorteil des quaderartigen bzw. hohlen Kennzeichenkörpers 11 besteht darin, dass die von der Antenne 16 emittierten elektromagnetischen Wellen durch die das metallisierte Bodenteil 21 in Fahrtrichtung bzw. entgegen der Fahrtrichtung, von dem Fahrzeug weg, reflektiert werden. Die von der Schlitzstruktur 17 bzw. Antenne 16 emittierten elektromagnetischen Wellen strahlen zum einen von dem Fahrzeug weg. Die elektromagnetischen Wellen, die zunächst in Richtung des Fahrzeuges emittiert werden, werden durch die metallische Beschichtung 23 des Bodenteils 21 rückreflektiert und treten durch die Schlitzstruktur 17 aus, dadurch wird die Sendeleistung der Antenne 16 verstärkt. Gleichermaßen lässt sich durch diese Ausbildung des Kennzeichenkörpers 11 auch die Empfangsleistung der Antenne 16 verstärken. Durch diese Verstärkung der Sendeleistung können die Datenträger auch über eine größere Distanz bzw. einen größeren Raumwinkelbereich problemlos ausgelesen werden. Dies erweist sich insbesondere für den Einsatz im Straßenverkehr als besonders vorteilhaft.

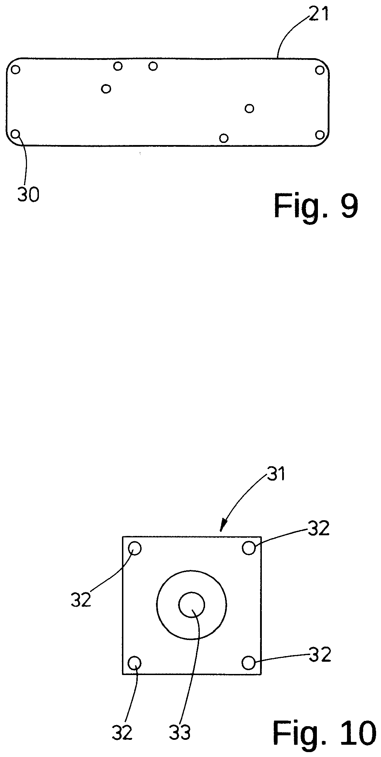

Für das Anbringen des Kennzeichens 10 an das Fahrzeug können einer Rückseite des Bodenteils 21 eine Vielzahl von Bohrungen 30 zugeordnet sein. Diese Bohrungen 30 können gemäß eines vorgegebenen Rasters oder beliebig in das Bodenteil 21 angeordnet sein (Fig. 9). Über diese Bohrungen 30 ist das Kennzeichen 10 mittels Montagehilfen 31 an dem Fahrzeug befestigbar. Diese Montagehilfen 31 können rechteckig oder kreisförmig ausgebildet sein und weisen ein oder mehrere, bzw. wie in der Fig. 10 dargestellt vier, Ankermittel 32 auf. Die Montagehilfen 31 sind über einen zentrierten Durchbruch 33 an eine Karosserie oder eine Stoßstange des Fahrzeuges befestigbar. Beispielsweise lässt sich eine nicht dargestellte Schraube durch den Durchbruch 33 festziehen, sodass die Montagehilfe 31 fest mit dem Fahrzeug verbunden ist. Die Montagehilfe 31 wird derart an das Fahrzeug befestigt, dass die Ankermittel 32 mit einer der Bohrungen 30 verbindbar sind. Wenn die einzelnen Ankermittel 32 durch die Bohrungen 30 gesteckt werden, kommt es zu einer widerhakenartigen Verbindung zwischen der Montagehilfe 31 und dem Bodenteil 21 des Kennzeichenkörpers 11. Durch die Verwendung mehrerer Montagehilfen 31 lässt sich somit das Kennzeichen 10 auf eine einfache und flexible Art und Weise an eine nahezu beliebige Stelle an dem Fahrzeug befestigen und zwar derart, dass es wenigstens weitestgehend vor Manipulationsversuchen gesichert ist.

Es ist darüber hinaus auch denkbar, dass das Kennzeichen 10 auf eine andere Art und Weise an dem Fahrzeug befestigt wird.

### Bezugszeichenliste

- 10: Kennzeichen
- 11: Kennzeichenkörper
- 12: Beschriftung
- 13: Länderkennung
- 14: Beschriftungsfeld
- 15: Datenträger
- 16: Antenne
- 17: Schlitzstruktur
- 18: Hohlraum
- 19: Umrandung
- 20: Deckelteil
- 21: Bodenteil
- 22: Reflexfolie
- 23: metallische Beschichtung
- 24: Folie
- 25: Umrandung
- 26: Strukturelement
- 27: Beschichtung
- 28: Pfeil
- 29: Pfeil
- 30: Bohrung
- 31: Montagehilfe
- 32: Ankermittel
- 33: Durchbruch

## Patentansprüche

1. Kennzeichen (10) für ein Fahrzeug mit einem Kennzeichenkörper (11), der mindestens ein Beschriftungsfeld (14) aufweist und mit mindestens einer Beschriftung (12), die dem Beschriftungsfeld (14) den Kennzeichenkörpers (11) zugeordnet ist, wobei dem Kennzeichenkörper (11) ein berührungslos auslesbarer Datenträger (15) und eine Antenne (16) zugeordnet sind, **dadurch gekennzeichnet, dass** in dem Kennzeichenkörper (11) mindestens ein Hohlraum (18) angeordnet ist, wobei eine den Hohlraum (18) überdeckende Vorderseite (20) des Kennzeichenkörpers (11) oder eine Beschichtung (23) der Vorderseite (20) eine die Antenne (16) bildende Schlitzstruktur (17) aufweist und wobei der mindestens eine Hohlraum (18) durch eine Beabstandung der Vorderseite (20) und einer Rückseite (21) des Kennzeichenkörpers (11) gebildet ist, wobei die Vorderseite (20) und die Rückseite (21) eine gemeinsame Umrandung (25) aufweisen und die Vorderseite (20) und eine der Schlitzstruktur (17) gegenüberliegenden Innenseite der Rückseite (21) in dem Hohlraum (18) retroreflektierend ist.

2. Kennzeichen (10) nach Anspruch 1, **dadurch gekennzeichnet, dass** die Vorderseite (20), die Rückseite (21) und/oder die Umrandung (25) aus einem transparenten Material, vorzugsweise einem Kunststoff, hergestellt ist, wobei die Vorderseite (20), die Rückseite (21) und/oder die Umrandung (25) von außen und/oder innen wenigstens bereichsweise mit einer die Schlitzstruktur (17) aufweisenden Metallbeschichtung (23) beschichtet ist oder dass die Vorderseite (20), die Rückseite (21) und/oder die Umrandung (25) aus einem metallischen Material hergestellt ist.

3. Kennzeichen (10) nach einem der vorhergehenden Ansprüche, **dadurch gekennzeichnet, dass** die Schlitzstruktur (17) als gerader Schlitz ausgebildet ist, der parallel zu einer Seitenkante der Vorderseite (20) des Kennzeichenkörpers (11) orientiert ist oder dass die Schlitzstruktur (17) aus mehreren, insbesondere orthogonal oder parallel zueinander angeordneten, insbesondere zusammenhängenden, Schlitzen ausgebildet ist.

4. Kennzeichen (10) nach einem der vorhergehenden Ansprüche, **dadurch gekennzeichnet, dass** in dem Hohlraum (18) zwischen der Vorderseite (20) und der Rückseite (21) mindestens ein Abstandselement bzw. Strukturelement (26) angeordnet ist, insbesondere eine Vielzahl, von, vorzugsweise parallel zueinander ausgerichteten, Abstandselementen bzw. Strukturelementen (26).

5. Kennzeichen (10) nach einem der vorhergehenden Ansprüche, **dadurch gekennzeichnet, dass** die Vorderseite (20) und eine der Schlitzstruktur (17) gegenüberliegende Innenseite der Rückseite (21) in dem Hohlraum (18) mit einer retroreflektierenden Schicht (27) beschichtet ist, wobei die retroreflektierende Schicht der Innenseite größer ist als die Schlitzstruktur (17).

6. Kennzeichen (10) nach einem der vorhergehenden Ansprüche, **dadurch gekennzeichnet, dass** auf der Vorderseite (20) des Kennzeichenköpers (11) eine retroreflektierende, insbesondere selbstklebende, Schicht oder Folie (24) appliziert ist, die eine der Form der Schlitzstruktur (17) entsprechende Demetallisierung oder eine entsprechende schlitzartige Aussparung aufweist.

7. Kennzeichen (10) nach einem der vorhergehenden Ansprüche, **dadurch gekennzeichnet, dass** auf der Vorderseite (20) des Kennzeichenköpers (11), insbesondere auf einer retroreflektierenden Schicht des Kennzeichenköpers (11), die Beschriftung (12), vorzugsweise eine die Beschriftung (12) aufweisende, insbesondere selbstklebende, Schicht oder Folie (24), appliziert ist.

8. Kennzeichen (10) nach einem der vorhergehenden Ansprüche, **dadurch gekennzeichnet, dass** der Datenträger (15) ein ein magnetisches Feld erzeugender Datenträger (15) ist und, insbesondere induktiv und/oder kapazitiv, an die Antenne (16) gekoppelt ist, wobei der Datenträger (15) elektrisch isoliert von der Antenne (16) auf oder in dem Kennzeichenkörper (11) angeordnet ist.

9. Kennzeichen (10) nach einem der vorhergehenden Ansprüche, **dadurch gekennzeichnet, dass** die Schlitzstruktur (17) einen Durchbruch aufweist, wobei vorzugsweise der Durchbruch den Schlitz im Bereich eines geschlossenen Endes vergrößert, und der Datenträger (15) in dem Durchbruch angeordnet ist.

10. Kennzeichen (10) nach einem der vorhergehenden Ansprüche, **dadurch gekennzeichnet, dass** der Datenträger (15) in der Schlitzstruktur (17) bzw. in dem Durchbruch fixiert, insbesondere von einer Beschichtung abgedeckt oder eingegossen ist.

11. Kennzeichen (10) nach einem der vorhergehenden Ansprüche, **dadurch gekennzeichnet, dass** der Rückseite (21) des Kennzeichenkörpers (11) Montagehilfen (31), insbesondere Bohrungen oder sonstige Aufnahmen, zugeordnet sind, mit denen der Kennzeichenkörper (11) an dem Fahrzeug befestigbar ist.

12. Kennzeichen (10) nach einem der vorhergehenden Ansprüche, **dadurch gekennzeichnet, dass** die Schlitzstruktur (17) in einem ersten oder einem zweiten Drittel auf der Vorderseite (20) gemessen von einer Längsseite des Kennzeichenkörpers (11) positioniert ist.

## Claims

1. Licence plate (10) for a vehicle with a licence plate body (11) comprising at least one inscription field (14) and with at least one inscription (12) associated with the inscription field (14) of the licence plate body (11), wherein a contactlessly readable data medium (15) and an antenna (16) are associated with the licence plate body (11), **characterized in that** at least one cavity (18) is disposed in the licence plate body (11), wherein a front (20) of the licence plate body (11) or a coating (23) of the front (20) covering the cavity (18) comprises a slot structure (17) forming the antenna (16), and wherein the at least one cavity (18) is formed by a spacing between the front (20) and the rear (21) of the licence plate body (11), wherein the front (20) and the rear (21) have a common border (25), and the front (20) and an inner side of the rear (21) opposite the slot structure (17) in the cavity (18) are retroreflective.

2. Licence plate (10) according to Claim 1, **characterized in that** the front (20), the rear (21) and/or the border (25) is/are made of a transparent material, preferably a plastic, wherein the front (20), the rear (21) and/or the border (25) is/are coated from the outside and/or the inside at least in some areas with a metal coating (23) comprising the slot structure (17) or that the front (20), the rear (21) and/or the border (25) is/are made of a metallic material.

3. Licence plate (10) according to any one of the previous claims, **characterized in that** the slot structure (17) is embodied as a straight slot that is oriented parallel to a lateral edge of the front (20) of the licence plate body (11) or that the slot structure (17) is made of a plurality of slots, in particular disposed orthogonally or parallel to each other, in particular contiguous slots.

4. Licence plate (10) according to any one of the previous claims, **characterized in that** at least one distance element or structure element (26) is disposed in the cavity (18) between the front (20) and the rear (21), in particular a number of distance elements or structure elements (26), preferably oriented parallel to each other.

5. Licence plate (10) according to any one of the previous claims, **characterized in that** the front (20) and an inner side of the rear (21) opposite the slot structure (17) in the cavity (18) is coated with a retroreflective layer (27), wherein the retroreflective layer of the inner side is larger than the slot structure (17).

6. Licence plate (10) according to any one of the previous claims, **characterized in that** a retroreflective, in particular self-adhesive, layer or film (24) with a demetallisation corresponding to the shape of the slot structure (17) or a corresponding slot-shaped aperture is applied to the front (20) of the licence plate body (11).

7. Licence plate (10) according to any one of the previous claims, **characterized in that** the inscription (12), preferably an especially self-adhesive layer or film (24) comprising the inscription (12), is applied to the front (20) of the licence plate body (11), in particular to a retroreflective layer of the licence plate body (11).

8. Licence plate (10) according to any one of the previous claims, **characterized in that** the data medium (15) is a data medium (15) producing a magnetic field and is coupled to the antenna (16), in particular inductively and/or capacitively, wherein the data medium (15) is disposed on or in the licence plate body (11) and is electrically isolated from the antenna (16).

9. Licence plate (10) according to any one of the previous claims, **characterized in that** the slot structure (17) comprises a perforation, wherein the perforation preferably enlarges the slot in the vicinity of a closed end, and the data medium (15) is disposed in the perforation.

10. Licence plate (10) according to any one of the previous claims, **characterized in that** the data medium (15) is fixed in the slot structure (17) or in the perforation, in particular being covered by a coating or potted.

11. Licence plate (10) according to any one of the previous claims, **characterized in that** mounting aids (31), in particular bores or other receptacles, with which the licence plate body (11) can be fastened to the vehicle, are associated with the rear (21) of the licence plate body (11).

12. Licence plate (10) according to any one of the previous claims, **characterized in that** the slot structure (17) is positioned in a first or a second third on the front (20) measured from a longitudinal side of the licence plate body (11).

## Revendications

1. Plaque minéralogique (10) destinée à un véhicule, comprenant un corps de plaque minéralogique (11) qui présente au moins un champ de lettrage (14) et au moins un lettrage (12) qui est associé au champ de lettrage (14) du corps de plaque minéralogique (11), dans laquelle un support de données (15) pouvant être lu sans contact et une antenne (16) sont associés au corps de plaque minéralogique (11), **caractérisé en ce qu'**au moins un espace creux (18) est disposé dans le corps de plaque minéralogique (11), dans laquelle une face avant (20) du corps de plaque minéralogique (11) recouvrant l'espace creux (18) ou un revêtement (23) de la face avant (20) présente une structure de fente (17) formant l'antenne (16) et dans laquelle l'au moins un espace creux (18) est formé par un espacement de la face avant (20) et d'une face arrière (21) du corps de plaque minéralogique (11), dans laquelle la face avant (20) et la face arrière (21) présentent une bordure commune (25) et la face avant (20) et une face intérieure de la face arrière (21), opposée à la structure de fente (17), est rétroréfléchissante dans l'espace creux (18).

2. Plaque minéralogique (10) selon la revendication 1, **caractérisée en ce que** la face avant (20), la face arrière (21) et/ou la bordure (25) sont réalisées en un matériau transparent, de préférence une matière plastique, dans laquelle la face avant (20), la face arrière (21) et/ou la bordure (25) sont revêtues de l'extérieur et/ou de l'intérieur, au moins par zones, d'un revêtement métallique (23) présentant la structure de fente (17), ou **en ce que** la face avant (20), la face arrière (21) et/ou la bordure (25) sont réalisées en un matériau métallique.

3. Plaque minéralogique (10) selon l'une des revendications précédentes, **caractérisée en ce que** la structure de fente (17) est réalisée sous la forme d'une fente droite qui est orientée parallèlement à un bord latéral de la face avant (20) du corps de plaque minéralogique (11) ou **en ce que** la structure de fente (17) est réalisée à partir de plusieurs fentes, en particulier orthogonales ou parallèles les unes aux autres, en particulier contiguës.

4. Plaque minéralogique (10) selon l'une des revendications précédentes, **caractérisée en ce que**, dans l'espace creux (18) entre la face avant (20) et la face arrière (21), est disposé au moins un élément d'écartement ou un élément de structure (26), en particulier une pluralité d'éléments d'écartement ou d'éléments de structure (26), de préférence orientés parallèlement les uns aux autres.

5. Plaque minéralogique (10) selon l'une des revendications précédentes, **caractérisée en ce que** la face avant (20) et une face intérieure de la face arrière (21), opposée à la structure de fente (17) dans l'espace creux (18) sont revêtues d'une couche rétroréfléchissante (27), dans laquelle la couche rétroréfléchissante de la face intérieure est plus grande que la structure de fente (17) .

6. Plaque minéralogique (10) selon l'une des revendications précédentes, **caractérisée en ce qu'**une couche ou une feuille rétroréfléchissante, en particulier autocollante (24), qui présente une démétallisation correspondant à la forme de la structure de fente (17) ou un évidement en forme de fente correspondant, est appliquée sur la face avant (20) du corps de plaque minéralogique (11).

7. Plaque minéralogique (10) selon l'une des revendications précédentes, **caractérisée en ce que** le lettrage (12), de préférence une couche ou un film (24), en particulier autocollant, présentant le lettrage (12), est appliqué sur la face avant (20) du corps de plaque minéralogique (11), en particulier sur une couche rétroréfléchissante du corps de plaque minéralogique (11) .

8. Plaque minéralogique (10) selon l'une des revendications précédentes, **caractérisée en ce que** le support de données (15) est un support de données (15) générant un champ magnétique et est couplé, en particulier de manière inductive et/ou capacitive, à l'antenne (16), dans laquelle le support de données (15) est disposé sur ou dans le corps de plaque minéralogique (11) de manière isolée électriquement de l'antenne (16).

9. Plaque minéralogique (10) selon l'une des revendications précédentes, **caractérisée en ce que** la structure de fente (17) est une ouverture, dans laquelle le percement agrandit de préférence la fente dans la zone d'une extrémité fermée, et le support de données (15) est disposé dans l'ouverture.

10. Plaque minéralogique (10) selon l'une des revendications précédentes, **caractérisée en ce que** le support de données (15) est fixé dans la structure de fente (17) ou dans l'ouverture, en particulier recouvert d'un revêtement ou intégré dans celui-ci.

11. Plaque minéralogique (10) selon l'une des revendications précédentes, **caractérisée en ce que** des aides au montage (31), en particulier des perforations ou d'autres logements, sont associées à la face arrière (21) du corps de plaque minéralogique (11), au moyen desquelles le corps de plaque minéralogique (11) peut être fixé au véhicule.

12. Plaque minéralogique (10) selon l'une des revendications précédentes, **caractérisée en ce que** la structure de fente (17) est positionnée sur la face avant (20), dans un premier ou un deuxième tiers, mesuré à partir d'un côté longitudinal du corps de plaque minéralogique (11).
